# EUROPEAN PATENT SPECIFICATION

(11) **EP 4 590 767 B1**
(45) Date of publication and mention of the grant of the patent: **14.10.2026**
(21) Application number: 23748059.5
(22) Date of filing: 25.07.2023
(51) Int. Cl.: C08L 69/00

(54) **THERMOPLASTIC COMPOSITION WITH OPTIMAL PROPERTY BALANCE**
THERMOPLASTISCHE ZUSAMMENSETZUNG MIT OPTIMALEM EIGENSCHAFTSGLEICHGEWICHT
COMPOSITION THERMOPLASTIQUE AVEC ÉQUILIBRE DE PROPRIÉTÉS OPTIMAL

(30) Priority: 21.09.2022 EP 22196857
(43) Date of publication of application: 30.07.2025
(73) Proprietor: SABIC Global Technologies B.V., 4612 PX Bergen op Zoom (NL)
(72) Inventor: VAN DE WETERING, Karin, 6160 GA GELEEN (NL)
(74) Representative: Sabic Intellectual Property Group
(86) International application number: PCT/EP2023/070619
(87) International publication number: WO 2024/061517

(56) References cited:
- CN-A- 102 061 076
- CN-A- 107 987 502
- US-A1- 2021 054 193

## Description

The present invention relates to a thermoplastic composition comprising (A) aromatic polycarbonate, (B) polyethylene terephthalate, (C) poly(butylene terephthalate), (D) impact modifier, preferably (E) styrene acrylonitrile copolymer and optionally (F) additives. The thermoplastic composition according to the invention has improved balance between impact performance, flowability and stiffness. The present invention further relates to an article comprising the thermoplastic composition.

Thermoplastic composition based on polycarbonate is known in the art, for example:
WO 2017/093232 discloses a thermoplastic composition comprising 0 to 50 weight percent of a polycarbonate, 10 to 50 weight percent of a polyester carbonate copolymer, 5 to 20 weight percent of a poly(ethylene terephthalate), 20 to 50 weight percent of a poly(butylene terephthalate), and optionally 5 to 30 weight percent of an impact modifier, wherein weight percent is based on the combined amounts of polycarbonate, polyester carbonate copolymer, poly(ethylene terephthalate), poly(butylene terephthalate) and optional impact modifier.
US 2008/0269399 discloses a composition comprising a polyester-polycarbonate polymer comprising isophthalate-terephthalate-resorcinol ester units and carbonate units, a first polyester selected from poly(ethylene-terephthalate), poly(ethylene- isophthalate), or a combination thereof, and a second polyester comprising butylene-terephthalate units, cyclohexanedimethylene terephthalate units, or a combination of cyclohexanedimethylene terephthalate units and ethylene terephthalate units. The polyester polycarbonate polymer in this reference is manufactured using an interfacial process.
CN 102 061 076 A discloses a thermoplastic composition comprising aromatic polycarbonate; polyethylene terephthalate; polybutylene terephthalate; and ethylene acrylate copolymer impact modifier.

However, for demanding applications, e.g., an automotive exterior trim part, there is still a need of a thermoplastic composition with improved balance between impact performance, flowability and stiffness. Improved low temperature impact is especially desired.

It was found this need is met, at least in part, in accordance with the present invention which is directed at a thermoplastic composition comprising:
(A) from 30 to 59 wt.% aromatic polycarbonate, wherein the aromatic polycarbonate has a weight average molecular weight in the range from 14.0 to 45.6 kg/mol as measured with gel permeation chromatography (GPC) using polystyrene standard;
(B) from 20 to 40 wt.% polyethylene terephthalate, wherein the polyethylene terephthalate has an intrinsic viscosity in the range from 0.50 to 1.21 dl/g as measured according to ASTM D2857-95 (2007);
(C) from 2 to 25 wt.% poly(butylene terephthalate), wherein the poly(butylene terephthalate) has a weight average molecular weight in the range from 45.0 to 150.0 kg/mol as measured with gel permeation chromatography (GPC) using polystyrene standard;
(D) from 10 to 20 wt.% impact modifier having a fraction in the range, wherein the impact modifier is selected from the group consisting of acrylonitrile styrene butadiene copolymer, ethylene acrylate copolymer, ethylene acrylate glycidyl copolymer and mixtures thereof;
wherein wt.% is based on the total weight of the thermoplastic composition.

It was found the thermoplastic composition shows improvement on impact performance without much compromise on the flowability and stiffness. In the context of the present invention, the impact performance is quantified by notch Izod measurement (ISO180/1A at 23, 0 and -10 °C); the flowability is quantified by Spiral flow measurement (ASTM D-3123 09 (2017) at 3mm thickness) and stiffness is quantified by tensile modulus (ISO 527).

### (A) Aromatic polycarbonate

Aromatic polycarbonates are generally manufactured using two different technologies. In a first technology, known as the interfacial technology or interfacial process, phosgene is reacted with a bisphenol, typically bisphenol A (BPA) in a liquid phase. Another well-known technology is the so-called melt technology, sometimes also referred to as melt transesterification or melt polycondensation technology. In the melt technology, or melt process, a bisphenol, typically BPA, is reacted with a carbonate, typically diphenyl carbonate (DPC), in the melt phase. Aromatic polycarbonate obtained by the melt transesterification process is known to be structurally different from aromatic polycarbonate obtained by the interfacial process. In that respect it is noted that in particular the so called "melt polycarbonate" typically has a minimum amount of Fries branching, which is generally absent in "interfacial polycarbonate". Apart from that melt polycarbonate typically has a higher number of phenolic hydroxy end groups while polycarbonate obtained by the interfacial process is typically end-capped and has at most 150 ppm, preferably at most 50 ppm, more preferably at most 10 ppm of phenol hydroxyl endgroups.

In accordance with the invention, it is preferred that the aromatic polycarbonate comprises or consists of bisphenol A polycarbonate homopolymer (also referred to herein as bisphenol A polycarbonate). Preferably, the aromatic polycarbonate of the invention disclosed herein comprises at least 75 wt. %, preferably at least 95 wt. % of bisphenol A polycarbonate based on the total amount of aromatic polycarbonate. More preferably, the aromatic polycarbonate in the composition essentially consists or consists of bisphenol A polycarbonate. The aromatic polycarbonate according to the invention has a weight average molecular weight (Mw) in the range from 14.0 to 45.6 kg/mol, preferably in the range 17.7 to 38.9 kg/mol, more preferably in the range from 20.0 to 36.1 kg/mol as determined using gel permeation chromatography (GPC) with polystyrene standards. The aromatic polycarbonate preferably has a melt volume rate of from 4 - 30 cc/10min as determined in accordance with ASTM D1238 (300 °C, 1.2 kg).

In an aspect, the polycarbonate is an interfacial polycarbonate. In another aspect, the polycarbonate is a melt polycarbonate. In yet another aspect the polycarbonate is a mixture of from 20 - 80 wt. % or 40 - 60 wt.% of interfacial polycarbonate and from 80 - 20 wt. % or 60 - 40 wt.% of melt polycarbonate, based on the weight of the aromatic polycarbonate.

The aromatic polycarbonate according to the invention preferably comprises two or more aromatic polycarbonates having different weight average molecular weight. Preferably the aromatic polycarbonate according to the invention comprises two aromatic polycarbonates PC1 and PC2, wherein PC1 has a weight average molecular weight in the range from 14.2 to 26.1 kg/mol, preferably in the range from 18.3 to 23.8 kg/mol, more preferably in the range from 19.8 to 22.1 kg/mol as determined using GPC with polystyrene standards, wherein PC2 a weight average molecular weight in the range from 26.2 to 45.0 kg/mol, preferably in the range from 28.3 to 39.8 kg/mol, more preferably in the range from 29.8 to 34.1 kg/mol as determined using GPC with polystyrene standards. The amount ratio between PC1 and PC2 is preferably in the range from 0.5:1 to 7.5:1, preferably in the range from 0.5:1 to 6:1.

In the embodiments that the aromatic polycarbonate comprises two aromatic polycarbonates PC1 and PC2, the weight average molecular weight of the aromatic polycarbonate can be calculated using the following equation: ${M}_{W \left(PC\right)} = \left({M}_{W \left(PC1\right)}*{φ}_{PC 1}+{M}_{W \left(PC2\right)}*{φ}_{PC 2}\right) / \left({φ}_{PC 1}+{φ}_{PC 2}\right)$ wherein M_{W(PC)} is the weight average molecular weight of the aromatic polycarbonate; M_{W(PC1)} is the weight average molecular weight of PC1; M_{W(PC2)} is the weight average molecular weight of PC2; φ_{PC1} is the weight fraction of PC1 based on the total weight of the thermoplastic composition; φ_{PC2} is the weight fraction of PC2 based on the total weight of the thermoplastic composition.

The same calculation applies to the embodiments that the aromatic polycarbonate comprises more than two aromatic polycarbonates.

In another aspect the aromatic polycarbonate comprises a polycarbonate copolymer comprising structural units of bisphenol A and structural units from another bisphenol.

### (B) Polyethylene terephthalate

Polyethylene terephthalate (PET) is a well-known polyester and readily available. The polyethylene terephthalate may be a mixture of two or more different polyethylene terephthalates, for example a mixture of polyethylene terephthalates with mutually different molecular weights.

The polyethylene terephthalate may for example be a polyethylene terephthalate comprising polymeric units derived from ethylene glycol and terephthalic acid or an ester thereof such as dimethyl terephthalate. Preferably, the polyethylene terephthalate comprises polymeric units derived from ethylene glycol and terephthalic acid or an ester thereof such as dimethyl terephthalate.

The polyethylene terephthalate has an intrinsic viscosity in the range from 0.50 to 1.21 dl/g, preferably in the range from 0.71 to 1.08 dl/g, more preferably in the range from 0.75 to 0.96 dl/g as measured according to ASTM D2857-95 (2007)

The polyethylene terephthalate according to the invention can be obtained by interfacial polymerization or melt-process condensation, by solution phase condensation, or by transesterification polymerization wherein, for example, a dialkyl ester such as dimethyl terephthalate can be transesterified with ethylene glycol using acid catalysis, to generate polyethylene terephthalate. Alternatively, the polyethylene terephthalate according to the invention can be acquired by purchasing commercially available polyethylene terephthalate. In another embodiment, the polyethylene terephthalate is recycled material.

### (C) Poly(butylene terephthalate)

The poly(butylene terephthalate) (PBT) according to the invention may for example be a polymer comprising polymeric units derived from terephthalic acid or a diester thereof such as dimethyl terephthalate, and polymeric units derived from a butane-diol, such as 1,4-butanediol.

The PBT may further comprise polymeric units derived from other monomers, such as in particular isophthalic acid. For example, the PBT may comprise up to 10.0 wt.% of polymeric units derived from isophthalic acid, based on the weight of the PBT. Preferably, the PBT comprises up to 5.0 wt.% of units derived from isophthalic acid, such as from 1.0 - 4.0 wt.%. Alternatively, the PBT may be free of monomeric units other than units derived from butane-diol and terephthalic acid or a diester thereof. In other words, the PBT may be free from isophthalic acid.

The PBT may be a single polymer or may be a combination of 2 or more, preferably 2, PBT's having mutually different properties. For example, the PBT may comprise a first PBT and a second PBT each having a different weight average molecular weight. The PBT in the composition of the invention may accordingly be a blend of such a first and second (or further) PBTs.

In the embodiments that PBT comprises two PBTs: PBT1 and PBT2, the weight average molecular weight of the PBT can be calculated using the following equation: ${M}_{W \left(PBT\right)} = \left({M}_{W \left(PBT1\right)}*{φ}_{PBT 1}+{M}_{W \left(PBT2\right)}*{φ}_{PBT 2}\right) / \left({φ}_{PBT 1}+{φ}_{PBT 2}\right)$ wherein M_{W(PBT)} is the weight average molecular weight of the aromatic polycarbonate; M_{W(PBT1)} is the weight average molecular weight of PBT1; M_{W(PBT2)} is the weight average molecular weight of PBT2; φ_{PBT1} is the weight fraction of PBT1 based on the total weight of the thermoplastic composition; φ_{PBT2} is the weight fraction of PBT2 based on the total weight of the thermoplastic composition.

The same calculation applies to the embodiments that the PBT comprises more than two PBTs.

The PBT according to the invention has a weight average molecular weight in the range from 45.0 to 150.0 kg/mol, preferably in the range from 58.1 to 135.2 kg/mol, more preferably in the range from 64.2 to 125.3 kg/mol as measured with GPC using polystyrene standard.

The PBT may have a carboxylic end group content of from 10 - 80 mmol/kg, preferably from 20 - 60 mmol/kg, more preferably 20-40 mmol/kg as determined in accordance with ASTM D7409-15.

### (D) Impact modifier

The thermoplastic composition of the invention comprises an impact modifier. The impact modifier is selected from the group consisting of acrylonitrile styrene butadiene copolymer, ethylene acrylate copolymer, ethylene acrylate glycidyl copolymer and mixtures thereof.

Preferably the impact modifier has a mean particle size in the range from 152 to 627 nm, preferably in the range from 226 to 445 nm, more preferably in the range from 256 to 397 nm, more preferably in the range from 272 to 335 nm, wherein the mean particle size is calculated by the particle size of 10000 particles obtained by TEM.

Preferably the impact modifier is an acrylonitrile-styrene-butadiene (ABS) copolymer. It was found thermoplastic composition comprising ABS shows improved flowability and impact performance than other commonly used impact modifier e.g., methyl-methacrylate butadiene-styrene core shell impact modifier (MBS).

Preferably the acrylonitrile-styrene-butadiene has an acrylonitrile content in the range from 8.3 to 19.8 wt.%, preferably in the range from 10.2 to 14.7 wt.%, a butadiene content of 27.5 to 73.2 wt.%, preferably in the range from 38.2 to 61.7 wt.%, more preferably in the range from 44.2 to 54.6 wt.% and a styrene content in the range from 23.4 to 46.8 wt.%, preferably in the range from 32.1 to 42.0 wt.% based on the total weight of the acrylonitrile-butadiene-styrene copolymer. It was found that the butadiene content in the preferred range leads to optimal balance between impact performance and stiffness.

### (E) Styrene acrylonitrile copolymer (SAN)

Preferably the thermoplastic composition according to the invention comprises styrene acrylonitrile copolymer.

SAN according to the invention preferably has an acrylonitrile level in the range from 12 to 56 wt.%, preferably in the range from 18 to 31 wt.%, more preferably in the range from 19 to 29 wt.% based on the total weight of the styrene acrylonitrile copolymer. It was found acrylonitrile level in the preferred range leads to improved compatibility between SAN and PC.

Preferably SAN according to the invention has an MFR in the range from 8 to 30 g/10min, preferably in the range from 9 to 23 g/10min, more preferably in the range from 10 to 18 g/10min as determined according to ASTM D1238 at 230°C/1.2kg. It was found the thermoplastic composition comprising SAN in the preferred MFI range presents an optimal flow/impact property balance.

### (F) Optional additives

Optionally the thermoplastic composition according to the invention comprises additives. Typical additives include but are not limited to filler, reinforcing agent (e.g., glass fibers or glass flakes), antioxidant, heat stabilizer, light stabilizer, UV light stabilizer and/or UV absorbing additive, plasticizer, lubricant, release agent, in particular glycerol monostearate, pentaerythritol tetra stearate, glycerol tristearate, stearyl stearate, antistatic agent, antifog agent, antimicrobial agent, colorant (e.g., a dye or pigment), etc. (A) aromatic polycarbonate, (B) polyethylene terephthalate, (C) poly(butylene terephthalate), (D) impact modifier and (E) styrene acrylonitrile copolymer are not additives.

### Thermoplastic composition

The thermoplastic composition comprises:
(A) from 30 to 59 wt.%, preferably from 30 to 56 wt.%, more preferably from 33 to 52 wt.% aromatic polycarbonate;
(B) from 20 to 40 wt.%, preferably from 25 to 35 wt.% polyethylene terephthalate;
(C) from 2 to 25 wt.%, preferably from 8 to 16 wt.% poly(butylene terephthalate); and
(D) from 10 to 20 wt.%, preferably from 12 to 16 wt.% impact modifier.
wherein wt.% is based on the total weight of the thermoplastic composition.

It was found the thermoplastic composition comprising the preferred amount of (A) (B) (C) and (D) has improved flow/impact balance.

Preferably the thermoplastic composition according to the invention comprises 0 to 5 wt.% (E) styrene acrylonitrile copolymer (SAN) as flow modifier to improve the flowability of the thermoplastic composition. Preferably the thermoplastic composition comprises from 1.7 to 5.0 wt.%, preferable from 2.1 to 4.9 wt.% SAN. It was found the thermoplastic composition comprising SAN in the preferred amount range presents an optimal flow/impact property balance.

Optional the thermoplastic composition according to the invention comprises 0 to 3 wt.%, preferably 0 to 1.5 wt.% (F) additives.

Preferably the thermoplastic composition according to any one of the previous claims, wherein the following inequation is satisfied: ${M}_{W \left(PC\right)} + {M}_{W \left(poly\left(butylene terephthalate\right)\right)} * exp \left(0.01/{φ}_{poly \left(butylene terephthalate\right)}\right) \geq 101.5 kg / mol$

More preferably, M_{W(PC)}+M_{W(poly(butylene} terephthalate))*exp(0.01/(φ _{poly(butylene terephthalate)}) ≥ 102.5 kg/mol wherein M_{W(PC)} is the weight average molecular weight of the aromatic polycarbonate, M_{W(poly(butylene terephthalate))} is the weight average molecular weight of polyester poly(butylene terephthalate), φ _{poly(butylene terephthalate)} is the weight fraction of poly(butylene terephthalate) based on the total weight of the thermoplastic composition, wherein the weight average molecular weight is measured with GPC using polystyrene standard. It was found the thermoplastic composition satisfying the inequation has improved impact performance.

In the embodiments that the aromatic polycarbonate comprises two or more aromatic polycarbonates, e.g., two aromatic polycarbonates PC1 and PC2, the weight average molecular weight of the aromatic polycarbonate can be calculated using the following equation: ${M}_{W \left(PC\right)} = \left({M}_{W \left(PC1\right)}*{φ}_{PC 1}+{M}_{W \left(PC2\right)}*{φ}_{PC 2}\right) / \left({φ}_{PC 1}+{φ}_{PC 2}\right)$ wherein M_{W(PC)} is the weight average molecular weight of the aromatic polycarbonate; M_{W(PC1)} is the weight average molecular weight of PC1; M_{W(PC2)} is the weight average molecular weight of PC2; φ_{PC1} is the weight fraction of PC1 based on the total weight of the thermoplastic composition; φ_{PC2} is the weight fraction of PC2 based on the total weight of the thermoplastic composition. The same calculation applies to the embodiments that PBT comprises two or more PBTs.

Preferably the thermoplastic composition according to the invention has one or more - or is selected to have one or more - of the following properties:
- a Spiral flow of at least 44.0 cm preferably at least 45.0 cm as measured according to with ASTM D-3123 09 (2017) with 3mm thickness;
- an Izod notched impact strength at 0°C of at least 30 kJ/m2, preferably at least 50 kJ/m2 as measured according to ISO 180/1A;
- an Izod notched impact strength at -10°C of at least 24 kJ/m2, preferably at least 30 kJ/m2 as measured according to ISO 180/1A;
- a tensile modulus of at least 1900 MPa, preferably at least 1950 MPa, more preferably at least 2000 MPa as measured according to ISO 527 at a temperature of 23 °C.

Preferably, the total amount of (A) aromatic polycarbonate, (B) polyethylene terephthalate, (C) poly(butylene terephthalate), (D) impact modifier and (E) styrene acrylonitrile copolymer is at least 98wt.% and not more than 100 wt.% based on the total weight of the thermoplastic composition.

(A) Aromatic polycarbonate, (B) polyethylene terephthalate, (C) poly(butylene terephthalate), (D) impact modifier, (E) styrene acrylonitrile copolymer and (F) additives can be referred as components of the thermoplastic composition according to the invention.

The thermoplastic composition can be manufactured by various methods known in the art. For example, (A) aromatic polycarbonate, (B) polyethylene terephthalate, (C) poly(butylene terephthalate), (D) impact modifier and (E) styrene acrylonitrile copolymer are first blended, optionally with any (F) additives, in a high speed mixer or by hand mixing. The blend is then fed into the throat of a twin-screw extruder via a hopper. Thermoplastic compositions described herein were typically extruded on a WP 25 millimeter (mm) co-rotating intermeshing twin-screw extruder having L/D of 41. Alternatively, at least one of the components can be incorporated into the composition by feeding it directly into the extruder at the throat and/or downstream through a side feeder, or by being compounded into a masterbatch with a desired polymer and fed into the extruder. The extruder is generally operated at a temperature higher than that necessary to cause the thermoplastic composition to flow. In a typical experiment, the extruder was set with barrel temperatures between 150°C and 260°C. The material was run maintaining torque of 55-60% with a vacuum of 100 millibar (mbar) - 800 mbar applied to the melt during compounding. The extrudate can be immediately cooled in a water bath and pelletized. The pellets so prepared can be one-fourth inch long or less as desired. Such pellets can be used for subsequent molding, shaping, or forming.

The present invention also relates to an article comprising the thermoplastic composition according to the invention, wherein the article is preferably an automotive external trim part, more preferably a heavy truck external trim part, e.g. wheel covers, side panels, air deflectors, front & lower grills, center & corner bumper, step/step panel, mud guards, cladding, lateral skirts, battery cover. Preferably the article comprises at least 90 wt.%, preferably at least 95 wt.%, more preferably at least 98 wt.%, most preferably 100 wt.% of the thermoplastic composition. The article can for example be prepared by injection molding, extrusion, blow molding and thermoforming.

In the context of the present invention the terms "amount" and "weight" have the same meaning, both refer to the quantity in mass of the components in the thermoplastic composition.

### Experiment

### Materials

| | |
|---|---|
| PC2 (PC105) | Bisphenol A polycarbonate manufactured using an interfacial process, having a melt volume rate of 6 cc/10min in accordance with ASTM D1238 (300°C, 1.2 kg) and an Mw of 30.5 kg/mol available from SABIC. |
| PC1 (PC175) | Bisphenol A polycarbonate manufactured using an interfacial process, having a weight average molecular weight of about 22,000 g/mol and a melt volume rate of 26 cc/10min in accordance with ASTM D1238 (300°C, 1.2 kg) and an Mw of 21.8 kg/mol available from SABIC. |
| PBT1 | Poly(butylene terephthalate) having an Mw of 120 kg/mol, available from SABIC as Valox^{™} 315 |
| PBT2 | Poly (butylene terephthalate) having an Mw of 70 kg/mol, available from SABIC as Valox^{™} 195 |
| PET | Polyethylene terephthalate available from Indorama under trade name Ramapet, having an IV of 0.84 dl/g |
| ABS | ABS (acrylonitrile-butadiene-styrene copolymer) Impact modifier having an MFR of 11.5 g/10min as measured according to ASTM D1238 at 220 °C, 10 kg available from SABIC as Cycolac G360. This ABS is an ABS according to the invention |
| MBS | Methacrylate-butadiene-styrene copolymer core shell impact modifier having a polybutadiene content of 80 wt.%, commercially available from Dow as Paraloid MBS EXL 2650J |
| SAN | Styrene acrylonitrile copolymer available from SABIC, having an MFR of 12 g/10min at 230°C/1.2kg according to ASTM D1238 and an acrylonitrile level of 24% |
| MZP | Mono Zinc Phosphate, used as a quencher and commercially available from Budenheim as Budit T-21. |
| TBPP | tris(2,4-di-tert-butylphenyl)phosphite, commercially available as Irgafos 168 |
| AO | octadecyl-3-[3,5-di-tert-butyl-4-hydroxyphenyl]propionate, available from BASF as Irganox 1076 |
| PETS | Pentaerythritol Tetrastearate from Faci as PETS G |
| Talc | Jetfine 3CA from Imerys |
| Additive package | Consisting of 40 wt.% PETS, 7 wt.% MZP, 13wt.% TBPP, 13 wt.% AO, 27wt.% Talc based on the total weight of the additive package |

### Example preparation, measurement methods and Eq 1

All Examples were obtained from a compounding process on a 25mm co-rotating intermeshing twin-screw extruder having L/D of 41. The ingredients of each example were added at the feed throat of the extruder. The extruder was set with barrel temperatures between 150°C and 260°C. The material was run maintaining torque of 55-60% with a vacuum of 100 millibar (mbar) - 800 mbar applied to the melt during compounding. Examples were molded on an Engel 75T molding machine for further testing. Ex. refers to Examples according to the invention, CE. refers to comparative examples.

| | |
|---|---|
| Impact (INI) | Izod Notched Impact was determined in accordance with ISO 180/1A measured on injection moulded specimens having dimensions of 80 x 10.0 x 4.0 mm. INI was carried out at 23°C, 0°C and -10°C |
| Intrinsic viscosity | The intrinsic viscosity was determined in accordance with ASTM D2857-95 (2007), the solvent was 1:1 weight to weight mixture of phenol:1,1,2,2 - tetrachloro ethane at 30 °C. |
| Molecular weight | The weight average molecular weight of the PC and PBT was measured with GPC method using polystyrene standard in an Agilent 1200 system equipped with PL HFIPgel column and Refractive Index detector. The sample is dissolved in 10% HFIP solution in chloroform and the same solvent is used as carrier. |
| Eq 1 | M_{W(PC)}+M_{W(PBT)}*exp(0.01/φ_{PBT}) wherein M_{W(PC)} is the weight average molecular weight of PC, M_{W(PBT)} is the weight average molecular weight of PBT, φ_{PBT} is the weight fraction of PBT. If there is more than one PC in the composition, M_{W(PC)} is calculated as (M_{W(PC1)}*<φ_{PC1}+M_{W(PC2)}*φ_{PC2})/(φ_{PC1}+φ_{PC2}). Same applies to PET. |
| Tensile modulus | Tensile modulus was determined in accordance with ISO 527 at a temperature of 23 °C measured on injection moulded specimens having dimensions of 170 x 10.0 x 4.0 mm. |
| Spiral flow | Spiral flow was determined in accordance with ASTM D-3123 09 (2017) under the following conditions: 3mm, T zone 1-2-3: 255-265-275°C, T mold 60°C, 182 bar in an Engel 75T molding machine. |

### Result

The composition of examples along with their properties are presented in the tables below.

**Table 1. Composition and performance of Examples 1 to 8.**

| | | **CE. 1** | **Ex. 2** | **Ex. 3** | **CE. 4** | **CE. 5** | **CE. 6** | **CE. 7** | **Ex. 8** |
|---|---|---|---|---|---|---|---|---|---|
| **PC 1** | % | 39.25 | 39.25 | 39.25 | 39.25 | 39.25 | 57.39 | 67.39 | 57.39 |
| **PET** | % | 40 | 30 | 20 | 10 | - | 30 | 20 | 20 |
| **PBT 1** | % | - | 10 | 20 | 30 | 40 | - | - | 10 |
| **ABS** | % | 20 | 20 | 20 | 20 | 20 | 12 | 12 | 12 |
| **Additives** | % | 0.75 | 0.75 | 0.75 | 0.75 | 0.75 | 0.61 | 0.61 | 0.61 |
| **Result Eq 1** | kg/mol | | 154.4 | 148.0 | 145.9 | 144.8 | | | 154.4 |
| **Spiral Flow** | cm | 58.8 | 52.8 | 48.8 | 46.2 | 45.4 | 47.0 | 45.0 | 44.7 |
| **INI at 23°C** | kJ/m2 | 21.8 | 55.6 | 56.0 | 54.1 | 56.5 | 61.0 | 59.0 | 61.0 |
| **INI at 0°C** | kJ/m2 | 17.1 | 38.2 | 41.5 | 35.8 | 41.4 | 38.0 | 53.0 | 56.0 |
| **INI T -10°C** | kJ/m2 | 17.1 | 35.1 | 29.2 | 25.3 | 24.9 | 32.4 | 37.5 | 53.1 |
| **Ten.Mod.*** | GPa | 1886 | 1944 | 1986 | 1999 | 1990 | 2080 | 2080 | 2120 |

| | | | | | | | | | |
|---|---|---|---|---|---|---|---|---|---|
| **Ten.Mod. = Tensile Modulus* | | | | | | | | | |

Examples 1 to 5 are comparable with each other, among these Examples, only Ex2, 3 (containing both PBT and PET in an amount according to the invention) demonstrate optimal balance between Spiral flow, INI and Tensile modulus. By comparison between Examples 6 to 8, it is clear that only Ex. 8 containing both PBT and PET shows superior INI at -10°C.

**Table 2. Composition and performance of Example 9 to 12.**

| | | **Ex. 9** | **Ex. 10** | **Ex. 11** | **CE. 12** |
|---|---|---|---|---|---|
| **PC 1** | % | 47.25 | 43.25 | 39.25 | 35.25 |
| **PET** | % | 30 | 30 | 30 | 30 |
| **PBT 1** | % | 10 | 10 | 10 | 10 |
| **ABS** | % | 12 | 16 | 20 | 24 |
| **Additives** | % | 0.75 | 0.75 | 0.75 | 0.75 |
| **Result of Eq 1** | kg/mol | 154.4 | 154.4 | 154.4 | 154.4 |
| **Spiral Flow** | cm | 50.4 | 51.3 | 52.8 | 54.2 |
| **INI at 23°C** | kJ/m2 | 55.0 | 56.3 | 55.6 | 55.9 |
| **INI at 0°C** | kJ/m2 | 35.6 | 38.6 | 38.2 | 40.4 |
| **INI T -10°C** | kJ/m2 | 24.5 | 33.0 | 35.1 | 27.8 |
| **Tensile modulus** | GPa | 2111 | 2036 | 1944 | 1842 |

According to Table 2 a too high amount of ABS leads to unsatisfactory Tensile modulus.

**Table 3. Composition and performance of Example 13 to 16.**

| | | **CE. 15** | **CE. 16** | **CE. 13** | **CE. 14** |
|---|---|---|---|---|---|
| **PC 1** | % | 49.25 | 45.25 | 61.39 | 57.39 |
| **PET** | % | 30 | 30 | 30 | 30 |
| **PBT 1** | % | 10 | 10 | - | - |
| **MBS** | % | 10 | 14 | 8 | 8 |
| **SAN** | % | | | | 4 |
| **Additives** | % | 0.75 | 0.75 | 0.61 | 0.61 |
| **Spiral Flow** | cm | 49.4 | 51.2 | 36.2 | 40.0 |
| **INI at 23°C** | kJ/m2 | 41.1 | 41.5 | 57.1 | 61.6 |
| **INI at 0°C** | kJ/m2 | 35.7 | 36.8 | 51.2 | 45.1 |
| **INI T -10°c** | kJ/m2 | 24.8 | 33.4 | 40.0 | 26.9 |
| **Tensile modulus** | GPa | 2106 | 1998 | 2080 | 2110 |

According to Table 3, MBS is not as effective as ABS as an impact modifier since MBS leads inferior Spiral flow (CE. 13, 14) or inferior INI at 23°C (CE. 15, 16).

**Table 4. Composition and performance of Example 17 to 25**

| | | **Ex. 17** | **Ex. 18** | **Ex. 19** | **Ex. 20** | **Ex. 21** | **Ex. 22** | **Ex. 23** | **Ex. 24** | **Ex. 25** |
|---|---|---|---|---|---|---|---|---|---|---|
| **PC 1** | % | 39.25 | 29.437 5 | 19.625 | 34.25 | 34.25 | 19.625 | 37.2 5 | 37.2 5 | 32.2 5 |
| **PC 2** | % | | 9.8125 | 19.625 | 5 | 5 | 19.625 | 5 | 5 | 5 |
| **PET** | % | 30 | 30 | 30 | 30 | 30 | 30 | 32 | 32 | 30 |
| **PBT 1** | % | | | | 10 | | | 5 | | 12 |
| **PBT 2** | % | 10 | 10 | 10 | | 10 | 10 | | 5 | |
| **ABS** | % | 20 | 20 | 20 | 20 | 20 | 20 | 20 | 20 | 20 |
| **Additives** | % | 0.75 | 0.75 | 0.75 | 0.75 | 0.75 | 0.75 | 0.75 | 0.75 | 0.75 |
| **Result Eq 1** | kg/mol | 99.2 | 101.3 | 103.5 | 155.5 | 100.3 | 103.5 | 169. 4 | 108. 3 | 153. 4 |
| **Spiral Flow** | cm | 59.4 | 57.2 | 54.5 | 48.8 | 59.0 | 56.8 | 53.0 | 54.2 | 50.0 |
| **INI at 23°C** | kJ/m2 | 50.3 | 52.6 | 56.0 | 57.2 | 53.5 | 57.8 | 57.7 | 54.7 | 58.5 |
| **INI at 0°C** | kJ/m2 | 23.6 | 25.1 | 34.6 | 52.9 | 29.1 | 31.0 | 50.2 | 31.3 | 36.6 |
| **INI at -10°c** | kJ/m2 | 22.6 | 23.3 | 25.2 | 36.1 | 24.4 | 27.5 | 34.3 | 25.2 | 30.4 |
| **Ten.Mod.*** | GPa | 1967 | 1970 | 1981 | 1944 | 1961 | 1966 | 1913 | 1933 | 1967 |

| | | | | | | | | | | |
|---|---|---|---|---|---|---|---|---|---|---|
| **Ten.Mod. = Tensile Modulus* | | | | | | | | | | |

According to Table 4, the result of Eq 1 which is related to PC and PBT's molecular weight needs to be at least 101.5 kg/mol to achieve the improved INI at -10°C (at least 30.0 kJ/m2).

**Table 5. Composition and performance of Example 26 to 28.**

| | | **Ex. 26** | **Ex. 27** | **Ex. 28** |
|---|---|---|---|---|
| **PC 1** | % | 31.25 | 18.125 | 5 |
| **PC 2** | % | 5 | 18.125 | 28.25 |
| **PET** | % | 30 | 30 | 30 |
| **PBT 1** | % | 10 | 10 | 10 |
| **ABS** | % | 20 | 20 | 20 |
| **SAN** | % | 3 | 3 | 6 |
| **Additives** | % | 0.75 | 0.75 | 0.75 |
| **Result of Eq 1** | kg/mol | 155.6 | 158.8 | 161.8 |
| **Spiral Flow** | cm | 57.4 | 58.1 | 60.1 |
| **INI at 23°C** | kJ/m2 | 56.6 | 58.0 | 53.0 |
| **INI at 0°C** | kJ/m2 | 36.7 | 51.0 | 29.9 |
| **INI at -10°c** | kJ/m2 | 27.1 | 29.4 | 23.6 |
| **Tensile modulus** | GPa | 1990 | 1994 | 2044 |

According to Table 5, using SAN as flow modifier can result in better spiral flow performance, but a too high amount of SAN leads to a too low INI at -10°C.

## Claims

1. A thermoplastic composition comprising:
(A) from 30 to 59 wt.% aromatic polycarbonate, wherein the aromatic polycarbonate has a weight average molecular weight in the range from 14.0 to 45.6 kg/mol as measured with gel permeation chromatography (GPC) using polystyrene standard;
(B) from 20 to 40 wt.% polyethylene terephthalate, wherein the polyethylene terephthalate has an intrinsic viscosity in the range from 0.50 to 1.21 dl/g as measured according to ASTM D2857-95 (2007);
(C) from 2 to 25 wt.% poly(butylene terephthalate), wherein the poly(butylene terephthalate) has a weight average molecular weight in the range from 45.0 to 150.0 kg/mol as measured with gel permeation chromatography (GPC) using polystyrene standard;
(D) from 10 to 20 wt.% impact modifier having a fraction in the range, wherein the impact modifier is selected from the group consisting of acrylonitrile styrene butadiene copolymer, ethylene acrylate copolymer, ethylene acrylate glycidyl copolymer and mixtures thereof;
wherein wt.% is based on the total weight of the thermoplastic composition.

2. The thermoplastic composition according to claim 1, wherein thermoplastic composition comprises (E) from 0 to 5 wt.% styrene acrylonitrile copolymer.

3. The thermoplastic composition according to claim 2, wherein the (E) styrene acrylonitrile copolymer has an acrylonitrile level in the range from 12 to 56 wt.%, preferably in the range from 18 to 31 wt.%, more preferably in the range from 19 to 29 wt.% based on the total weight of the styrene acrylonitrile copolymer.

4. The thermoplastic composition according to claim 2 or 3, wherein the thermoplastic composition comprises from 1.7 to 5.0 wt.%, preferable from 2.1 to 4.9 wt.% (E) styrene acrylonitrile copolymer

5. The thermoplastic composition according to any one of claims 2 to 4, wherein the (E) styrene acrylonitrile copolymer has an MFR in the range from 8 to 30 g/10min, preferably in the range from 9 to 23 g/10min, more preferably in the range from 10 to 18 g/10min as determined according to ASTM D1238 at 230°C/1.2kg.

6. The thermoplastic composition according to any one of the previous claims, wherein the following inequation is satisfied: ${M}_{W \left(PC\right)} + {M}_{W \left(poly\left(butylene terephthalate\right)\right)} * exp \left(0.01/{φ}_{poly \left(butylene terephthalate\right)}\right) \geq 101.5 kg / mol$ wherein M_{W(PC)} is the weight average molecular weight of the aromatic polycarbonate, M_{W(poly(bulylene terephthalate))} is the weight average molecular weight of polyester poly(butylene terephthalate), φ _{poly(butylene terephthalate)} is the weight fraction of poly(butylene terephthalate) based on the total weight of the thermoplastic composition, wherein the weight average molecular weight is measured with GPC using polystyrene standard.

7. The thermoplastic composition according to any one of the previous claims, wherein the (D) impact modifier has a mean particle size in the range from 152 to 627 nm, preferably in the range from 226 to 445 nm, more preferably in the range from 256 to 397 nm, more preferably in the range from 272 to 335 nm, wherein the mean particle size is determined in accordance with the method disclosed in the specification.

8. The thermoplastic composition according to any one of the previous claims, wherein the (D) impact modifier is an acrylonitrile butadiene styrene copolymer

9. The thermoplastic composition according to claim 8, wherein the acrylonitrile butadiene styrene copolymer has an acrylonitrile content in the range from 8.3 to 19.8 wt.%, a butadiene content of 27.5 to 73.2 wt.%, preferably in the range from 38.2 to 61.7 wt.%, and a styrene content of 23.4 to 46.8 wt.% based on the total weight of the acrylonitrile-butadiene-styrene copolymer.

10. The thermoplastic composition according to any one of the previous claims, wherein the (A) aromatic polycarbonate comprises two or more aromatic polycarbonates having different weight average molecular weight.

11. The thermoplastic composition according to any one of the previous claims wherein (B) polyethylene terephthalate has an intrinsic viscosity in the range from 0.71 to 1.08 dl/g, preferably in the range from 0.75 to 0.96 dl/g.

12. The thermoplastic composition according to any one of the previous claims, wherein the thermoplastic composition comprises from 30 to 56 wt.%, preferably from 33 to 52 wt.% (A) aromatic polycarbonate.

13. The thermoplastic composition according to any one of the previous claims selected to have one or more of the following:
- a Spiral flow of at least 44.0 cm preferably at least 45.0 cm as measured according to with ASTM D-3123 09 (2017) with 3mm thickness;
- an Izod notched impact strength at 0°C of at least 30 kJ/m2, preferably at least 50 kJ/m2 as measured according to ISO 180/1A;
- an Izod notched impact strength at -10°C of at least 24 kJ/m2, preferably at least 30 kJ/m2 as measured according to ISO 180/1A;
- a tensile modulus of at least 1900 MPa, preferably at least 1950 MPa, more preferably at least 2000 MPa as measured according to ISO 527 at a temperature of 23 °C.

14. The thermoplastic composition according to any one of the previous claims wherein the total amount of (A) aromatic polycarbonate, (B) polyethylene terephthalate, (C) poly(butylene terephthalate), (D) impact modifier and (E) styrene acrylonitrile copolymer is at least 98wt.% and not more than 100 wt.% based on the total weight of the thermoplastic composition.

15. An article comprising the thermoplastic composition according to any one of the previous claims, wherein the article is preferably an automotive external trim part.

## Patentansprüche

1. Thermoplastische Zusammensetzung, umfassend:
a) 30 bis 59 Gew.-% aromatisches Polycarbonat, wobei das aromatische Polycarbonat ein gewichtsmittleres Molekulargewicht im Bereich von 14,0 bis 45,6 kg/mol aufweist, gemessen mit Gelpermeationschromatographie (GPC) unter Verwendung von Polystyrolstandard;
b) 20 bis 40 Gew.-% Polyethylenterephthalat, wobei das Polyethylenterephthalat eine intrinsische Viskosität im Bereich von 0,50 bis 1,21 dl/g aufweist, gemessen nach ASTM D2857-95 (2007);
c) 2 bis 25 Gew.-% Poly(butylenterephthalat), wobei das Poly(butylenterephthalat) ein gewichtsmittleres Molekulargewicht im Bereich von 45,0 bis 150,0 kg/mol aufweist, gemessen mit Gelpermeationschromatographie (GPC) unter Verwendung von Polystyrolstandard;
d) 10 bis 20 Gew.-% Schlagzähigkeitsmodifikator, der einen Anteil im Bereich aufweist, wobei der Schlagzähigkeitsmodifikator ausgewählt ist aus der Gruppe bestehend aus Acrylnitril-Styrol-Butadien-Copolymer, Ethylenacrylat-Copolymer, Ethylenacrylat-Glycidyl-Copolymer und Mischungen davon;
wobei Gew.-% auf das Gewicht der Zusammensetzung bezogen sind.

2. Thermoplastische Zusammensetzung nach Anspruch 1, wobei die thermoplastische Zusammensetzung (E) 0 bis 5 Gew.-% Styrol-Acrylnitril-Copolymer umfasst.

3. Thermoplastische Zusammensetzung nach Anspruch 2, wobei das (E) Styrol-Acrylnitril-Copolymer einen Acrylnitrilgehalt im Bereich von 12 bis 56 Gew.-%, vorzugsweise im Bereich von 18 bis 31 Gew.-.%, bevorzugter im Bereich von 19 bis 29 Gew.-% aufweist, bezogen auf das Gesamtgewicht des Styrol-Acrylnitril-Copolymers.

4. Thermoplastische Zusammensetzung nach Anspruch 2 oder 3, wobei die thermoplastische Zusammensetzung 1,7 bis 5,0 Gew.-%, vorzugsweise 2,1 bis 4,9 Gew.-% (E) Styrol-Acrylnitril-Copolymer umfasst.

5. Thermoplastische Zusammensetzung nach einem der Ansprüche 2 bis 4, wobei das (E)-Styrol-Acrylnitril-Copolymer eine MFR im Bereich von 8 bis 30 g/10 min, vorzugsweise im Bereich von 9 bis 23 g/10 min, bevorzugter im Bereich von 10 bis 18 g/10 min aufweist, bestimmt nach ASTM D1238 bei 230°C/1,2 kg.

6. Thermoplastische Zusammensetzung nach einem der vorstehenden Ansprüche, wobei die folgende Ungleichung erfüllt ist: ${M}_{W \left(PC\right)} + {M}_{W \left(Poly\left(butylenterephthalat\right)\right)} * exp \left(0,01/{φ}_{Poly \left(butylenterephthalat\right)}\right) \geq 101 , 15 kg / mol$ wobei M_{W(PC)} das gewichtsmittlere Molekulargewicht des aromatischen Polycarbonats, M_{w(Poly(butylenterephthalat))} das gewichtsmittlere Molekulargewicht des Polyesters Poly(butylenterephthalat), φ Poly(butylenterephthalat) der Massenanteil von Poly(butylenterephthalat) bezogen auf das Gesamtgewicht der thermoplastischen Zusammensetzung ist, wobei das gewichtsmittlere Molekulargewicht mittels GPC unter Verwendung von Polystyrolstandard gemessen wird.

7. Thermoplastische Zusammensetzung nach einem der vorstehenden Ansprüche, wobei der Schlagzähmodifikator (D) eine mittlere Partikelgröße im Bereich von 152 bis 627 nm, vorzugsweise im Bereich von 226 bis 445 nm, bevorzugter im Bereich von 256 bis 397 nm, bevorzugter im Bereich von 272 bis 335 nm aufweist, wobei die mittlere Partikelgröße nach dem in der Beschreibung offenbarten Verfahren bestimmt wird.

8. Thermoplastische Zusammensetzung nach einem der vorstehenden Ansprüche, wobei es sich bei dem Schlagzähmodifikator (D) um ein Acrylnitril-Butadien-StyrolCopolymer handelt.

9. Thermoplastische Zusammensetzung nach Anspruch 8, wobei das Acrylnitril-Butadien-Styrol-Copolymer einen Acrylnitrilgehalt im Bereich von 8,3 bis 19,8 Gew.-%, einen Butadiengehalt von 27,5 bis 73,2 Gew.-%, vorzugsweise im Bereich von 38,2 bis 61,7 Gew.-%, und einen Styrolgehalt von 23,4 bis 46,8 Gew.-%, bezogen auf das Gesamtgewicht des Acrylnitril-Butadien-Styrol-Copolymers aufweist.

10. Thermoplastische Zusammensetzung nach einem der vorstehenden Ansprüche, wobei das (A) aromatische Polycarbonat zwei oder mehr aromatische Polycarbonate mit unterschiedlichem gewichtsmittlerem Molekulargewicht umfasst.

11. Thermoplastische Zusammensetzung nach einem der vorstehenden Ansprüche, wobei (B) Polyethylenterephthalat eine intrinsische Viskosität im Bereich von 0,71 bis 1,08 dl/g, vorzugsweise im Bereich von 0,75 bis 0,96 dl/g aufweist.

12. Thermoplastische Zusammensetzung nach einem der vorstehenden Ansprüche, wobei die thermoplastische Zusammensetzung 30 bis 56 Gew.-%, vorzugsweise 33 bis 52 Gew.-% (A) aromatisches Polycarbonat umfasst.

13. Thermoplastische Zusammensetzung nach einem der vorstehenden Ansprüche, die so ausgewählt ist, dass sie eine oder mehrere der folgenden Eigenschaften aufweist:
- eine spiralförmige Strömung von mindestens 44,0 cm, vorzugsweise mindestens 45,0 cm, gemessen nach ASTM D-3123 09 (2017) mit einer Dicke von 3 mm;
- eine Izod-Kerbschlagzähigkeit bei 0°C von mindestens 30 kJ/m2, vorzugsweise mindestens 50 kJ/m2 gemessen nach ISO 180/1A;
- eine Izod-Kerbschlagzähigkeit bei -10°C von mindestens 24 kJ/m2, vorzugsweise mindestens 30 kJ/m2 gemessen nach ISO 180/1A;
- ein Zugmodul von mindestens 1900 MPa, vorzugsweise mindestens 1950 MPa, bevorzugter mindestens 2000 MPa, gemessen nach ISO 527 bei einer Temperatur von 23 °C.

14. Thermoplastische Zusammensetzung nach einem der vorstehenden Ansprüche, wobei die Gesamtmenge an (A) aromatischem Polycarbonat, (B) Polyethylenterephthalat, (C) Poly(butylenterephthalat), (D) Schlagzähmodifikator und (E) Styrol-Acrylnitril-Copolymer mindestens 98 Gew.-% und nicht mehr als 100 Gew.-%, bezogen auf das Gesamtgewicht der thermoplastischen Zusammensetzung, beträgt.

15. Artikel, umfassend die thermoplastische Zusammensetzung nach einem der vorstehenden Ansprüche, wobei es sich bei dem Artikel vorzugsweise um ein äußeres Zierteil für Kraftfahrzeuge handelt.

## Revendications

1. Composition thermoplastique comprenant :
a) de 30 à 59 % en poids de polycarbonate aromatique, dans laquelle le polycarbonate aromatique présente une masse moléculaire moyenne en poids dans la plage de 14,0 à 45,6 kg/mol telle que mesurée par chromatographie par perméation de gel (GPC) en utilisant un étalon de polystyrène ;
b) de 20 à 40 % en poids de polyéthylène téréphtalate, dans laquelle le polyéthylène téréphtalate présente une viscosité intrinsèque dans la plage de 0,50 à 1,21 dl/g telle que mesurée selon ASTM D2857-95 (2007) ;
c) de 2 à 25 % en poids de poly(téréphtalate de butylène), dans laquelle le poly(téréphtalate de butylène) présente une masse moléculaire moyenne en poids dans la plage de 45,0 à 150,0 kg/mol telle que mesurée par chromatographie par perméation de gel (GPC) en utilisant un étalon de polystyrène ;
d) de 10 à 20 % en poids de modificateur d'impact présentant une fraction dans la plage, dans laquelle le modificateur d'impact est choisi dans le groupe consistant en copolymère d'acrylonitrile, de styrène et de butadiène, copolymère d'éthylène et d'acrylate, copolymère d'éthylène et d'acrylate de glycidyle et des mélanges de ceux-ci ;
dans laquelle les % en poids sont basés sur le poids total de la composition thermoplastique.

2. Composition thermoplastique selon la revendication 1, dans laquelle la composition thermoplastique comprend (E) de 0 à 5 % en poids de copolymère de styrène et d'acrylonitrile.

3. Composition thermoplastique selon la revendication 2, dans laquelle le (E) copolymère de styrène et d'acrylonitrile présente une teneur en acrylonitrile dans la plage de 12 à 56 % en poids, de préférence dans la plage de 18 à 31 % en poids, plus préférentiellement dans la plage de 19 à 29 % en poids par rapport au poids total du copolymère de styrène et d'acrylonitrile.

4. Composition thermoplastique selon la revendication 2 ou 3, dans laquelle la composition thermoplastique comprend de 1,7 à 5,0 % en poids, de préférence de 2,1 à 4,9 % en poids de (E) copolymère de styrène et d'acrylonitrile.

5. Composition thermoplastique selon l'une quelconque des revendications 2 à 4, dans laquelle le (E) copolymère de styrène et d'acrylonitrile présente un MFR dans la plage de 8 à 30 g/10 min, de préférence dans la plage de 9 à 23 g/10 min, plus préférentiellement dans la plage de 10 à 18 g/10 min tel que déterminé selon ASTM D1238 à 230 °C/1,2 kg.

6. Composition thermoplastique selon l'une quelconque des revendications précédentes, dans laquelle l'inéquation suivante est satisfaite : ${M}_{W \left(PC\right)} + {M}_{W \left(poly\left(téréphtalate de butylène\right)\right)} * exp \left(0,01/{φ}_{poly \left(téréphtalate de butylène\right)}\right) \geq 101 , 5 kg / mol$ dans laquelle M_{W(PC)} est la masse moléculaire moyenne en poids du polycarbonate aromatique, M_{w(poly(téréphtalate de butylène))} est la masse moléculaire moyenne en poids du polyester poly(téréphtalate de butylène), φ poly(téréphtalate de butylène) est la fraction massique de poly(téréphtalate de butylène) par rapport au poids total de la composition thermoplastique, dans laquelle la masse moléculaire moyenne en poids est mesurée par GPC en utilisant un étalon de polystyrène.

7. Composition thermoplastique selon l'une quelconque des revendications précédentes, dans laquelle le modificateur d'impact (D) présente une taille moyenne de particules dans la plage de 152 à 627 nm, de préférence dans la plage de 226 à 445 nm, plus préférentiellement dans la plage de 256 à 397 nm, plus préférentiellement dans la plage de 272 à 335 nm, dans laquelle la taille moyenne de particules est déterminée conformément au procédé divulgué dans le mémoire descriptif.

8. Composition thermoplastique selon l'une quelconque des revendications précédentes, dans laquelle le (D) modificateur d'impact est un copolymère d'acrylonitrile, de butadiène et de styrène.

9. Composition thermoplastique selon la revendication 8, dans laquelle le copolymère d'acrylonitrile, de butadiène et de styrène présente une teneur en acrylonitrile dans la plage de 8,3 à 19,8 % en poids, une teneur en butadiène de 27,5 à 73,2 % en poids, de préférence dans la plage de 38,2 à 61,7 % en poids, et une teneur en styrène de 23,4 à 46,8 % en poids par rapport au poids total du copolymère d'acrylonitrile, de butadiène et de styrène.

10. Composition thermoplastique selon l'une quelconque des revendications précédentes, dans laquelle le (A) polycarbonate aromatique comprend deux polycarbonates aromatiques ou plus présentant une masse moléculaire moyenne en poids différente.

11. Composition thermoplastique selon l'une quelconque des revendications précédentes, dans laquelle le (B) polyéthylène téréphtalate présente une viscosité intrinsèque dans la plage de 0,71 à 1,08 dl/g, de préférence dans la plage de 0,75 à 0,96 dl/g.

12. Composition thermoplastique selon l'une quelconque des revendications précédentes, dans laquelle la composition thermoplastique comprend de 30 à 56 % en poids, de préférence de 33 à 52 % en poids de (A) polycarbonate aromatique.

13. Composition thermoplastique selon l'une quelconque des revendications précédentes, choisie pour présenter une ou plusieurs des caractéristiques suivantes :
- un flux spiralé d'au moins 44,0 cm, de préférence d'au moins 45,0 cm, tel que mesuré selon ASTM D-3123 09 (2017) avec une épaisseur de 3 mm ;
- une résistance au choc Izod sur éprouvette entaillée à 0 °C d'au moins 30 kJ/m2, de préférence d'au moins 50 kJ/m2, telle que mesurée selon ISO 180/1A ;
- une résistance au choc Izod sur éprouvette entaillée à -10 °C d'au moins 24 kJ/m2, de préférence d'au moins 30 kJ/m2, telle que mesurée selon ISO 180/1A ;
- un module de traction d'au moins 1900 MPa, de préférence d'au moins 1950 MPa, plus préférentiellement d'au moins 2000 MPa, tel que mesuré selon ISO 527 à une température de 23 °C.

14. Composition thermoplastique selon l'une quelconque des revendications précédentes, dans laquelle la quantité totale de (A) polycarbonate aromatique, (B) téréphtalate de polyéthylène, (C) poly(téréphtalate de butylène), (D) modificateur d'impact et (E) copolymère de styrène et d'acrylonitrile est d'au moins 98 % en poids et d'au plus 100 % en poids par rapport au poids total de la composition thermoplastique.

15. Article comprenant la composition thermoplastique selon l'une quelconque des revendications précédentes, dans lequel l'article est de préférence une pièce de garniture extérieure automobile.
